# EUROPEAN PATENT APPLICATION

(11) **EP 4 835 263 A1**
(43) Date of publication of application: **04.11.2026**
(21) Application number: 26172904.0
(22) Date of filing: 16.04.2026
(51) Int. Cl.: F01D 25/16, F01D 11/00, F01D 11/02, F02C 7/06, F16C 27/04

(54) **GAS TURBINE BEARING COMPARTMENT WITH RADIAL SEALS OUTWARDLY OF THE BEARING ATTACHED TO A STATIC PORTION OF THE BEARING**

(30) Priority: 16.04.2025 US 202519181081
(71) Applicant: RTX Corporation, Farmington, CT 06032 (US)
(72) Inventor: DUFFY, Kevin M., Farmington, 06032 (US); AMADOR, Armando, Farmington, 06032 (US)
(74) Representative: Dehns

(57) **Abstract**

A gas turbine engine (20) includes a turbine section (28) and a compressor section (24). The turbine section (28) and the compressor section (24) each include rotors, with a first turbine rotor driving a first compressor rotor through at least one shaft (106; 206; 306; 402). At least one bearing compartment (100; 200; 300) supports the at least one shaft (106; 206; 306; 402). The bearing compartment (100; 200; 300) includes static structure (102; 202; 302), and a bearing (104; 204; 304) supporting the at least one shaft (106; 206; 306; 402) for rotation, and for rotation about a rotational axis, and radial seals (118; 218; 318; 404) sealing on a radially outer surface of the at least one shaft (106; 206; 306; 402) and positioned on each axial side of the bearing (104; 204; 304). The bearing (104; 204; 304) is connected to the static structure (102; 202; 302) through a flexible centering spring (108; 208; 308). The radial seals (118; 218; 318; 404) are attached to a non-rotating portion of the bearing (104; 204; 304), and also to the flexible centering spring (108; 208; 308) such that the non-rotating portion of the radial seals (118; 218; 318; 404) can move radially along with the fixed portion of the bearing (104; 204; 304) relative to the static structure (102; 202; 302).

## Description

### TECHNICAL FIELD

The present invention relates to gas turbine engine bearing compartments.

### BACKGROUND OF THE INVENTION

Bearing compartments are known in many applications. As one example, bearings are utilized to mount shafts in gas turbine engines. The bearing compartment includes static structure defining a sealed compartment that is provided with lubricant to lubricate the bearing.

Seals are positioned on opposed axial sides of the bearing, and limit leakage of oil outwardly of the bearing compartment. During operation there is radial deflection between static components and rotating components.

As such, it is known to provide a flexible centering spring mount between a static structure and a static portion of the bearing that allows radial movement between the two.

### SUMMARY OF THE INVENTION

In an aspect of the present invention, a gas turbine engine includes a turbine section and a compressor section. The turbine section and the compressor section each include rotors, with a first turbine rotor driving a first compressor rotor through at least one shaft. At least one bearing compartment supports the at least one shaft. The first bearing compartment includes static structure, and a bearing supporting the at least one shaft for rotation, and for rotation about a rotational axis, and radial seals sealing on a radially outer surface of the at least one shaft and positioned on each axial side of the at least one bearing. The at least one bearing is connected to the static structure through a flexible centering spring. The radial seals are attached to a non-rotating portion of the at least one bearing, and also to the flexible centering spring such that the non-rotating portion of the radial seals can move radially along with the fixed portion of the at least one bearing relative to the static structure.

In an embodiment of the above, a damper annulus is defined between an outer peripheral surface of the at least one bearing and inner peripheral surface of the static surface, and the bearing compartment being provided with a lubricant supply such that lubricant may pass into the damper annulus to dampen radial movement of the bearing relative to the static surface.

In another embodiment according to any of the previous embodiments, the flexible centering spring includes a portion attached to the static surface which has a plurality of axially extending, and circumferentially spaced, fingers separated by open windows to provide a spring on the flexible centering spring.

In another embodiment according to any of the previous embodiments, the radial seals are attached to the flexible centering spring through static structure which is attached to walls of the bearing compartment through flexible chamber walls.

In another embodiment according to any of the previous embodiments, the flexible chamber walls are defined by structure having undulations.

In another embodiment according to any of the previous embodiments, the flexible chamber walls are defined by bellows.

In another embodiment according to any of the previous embodiments, air buffer chambers are provided axially outwardly of both of the radial seals, and the air buffer chamber to receive buffer high pressure air to resist migration of lubricant from the bearing compartment axially outwardly of the radial seals.

In another embodiment according to any of the previous embodiments, buffer seals are positioned on opposed axial sides of the radial seals to assist in sealing the buffer chamber.

In another embodiment according to any of the previous embodiments, the buffer seals are fixed to static structure.

In another embodiment according to any of the previous embodiments, the buffer seals are attached to structure that is attached to the flexible centering spring such that the buffer seals can move along with a static portion of the bearing and the radial seals to adjust during operation of the gas turbine engine.

In another embodiment according to any of the previous embodiments, a buffer seal wall which mounts the buffer seals also includes a flexible compartment wall that mounts to the housing which mounts the static seal to the flexible centering spring.

In another embodiment according to any of the previous embodiments, the flexible centering spring includes a portion attached to the static surface which has a plurality of axially extending, and circumferentially spaced, fingers separated by open windows to provide a spring on the flexible centering spring.

In another embodiment according to any of the previous embodiments, the radial seals are attached to the flexible centering spring through static structure which is attached to walls of the bearing compartment through flexible chamber walls.

In another embodiment according to any of the previous embodiments, the flexible chamber walls are defined by structure having undulations.

In another embodiment according to any of the previous embodiments, the flexible chamber walls are defined by bellows.

In another embodiment according to any of the previous embodiments, air buffer chambers are provided axially outwardly of both of the radial seals, and the air buffer chamber to receive buffer high pressure air to resist migration of lubricant from the bearing compartment axially outwardly of the radial seals.

In another embodiment according to any of the previous embodiments, buffer seals are positioned on opposed axial sides of the radial seals to assist in sealing the buffer chamber.

In another embodiment according to any of the previous embodiments, the buffer seals are fixed to static structure.

In another embodiment according to any of the previous embodiments, the buffer seals are attached to structure that is attached to the flexible centering spring such that the buffer seals can move along with a static portion of the bearing and the radial seals to adjust during operation of the gas turbine engine, and a buffer seal wall which mounts the buffer seals also includes a flexible compartment wall that mounts to the housing which mounts the static seal to the flexible centering spring.

In another embodiment according to any of the previous embodiments, a rotating seal structure rotates with the shaft and engages the non-rotating radial seal.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows an example gas turbine engine.
Figure 2A shows a disclosed bearing compartment.
Figure 2B shows a portion of a centering spring.
Figure 3 shows a second embodiment bearing compartment.
Figure 4 shows a third embodiment bearing compartment.
Figure 5 shows a fourth embodiment.

### DETAILED DESCRIPTION

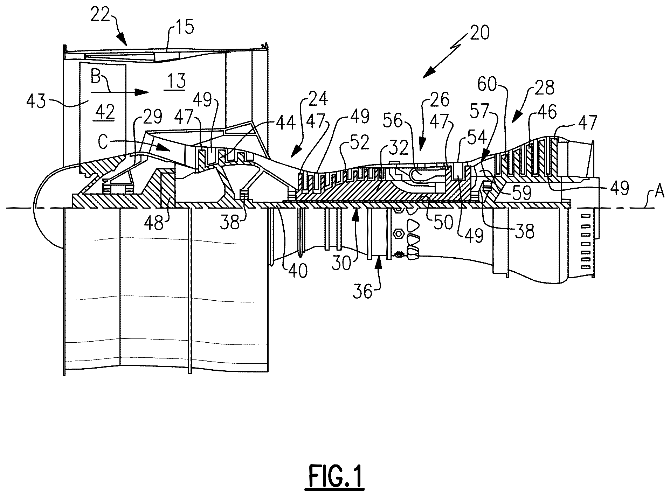

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (1.0 m), or more narrowly no more than 75 inches (1.9 m). For example, the maximum radius of the fan blades 43 can be between 45 inches (1.1 m) and 60 inches, such as between 50 inches (1.3 m) and 55 inches (1.4 m). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482 °C), or more narrowly less than or equal to 3500.0 °F (1927 °C), such as between 2750.0 °F (1510 °C) and 3350.0 °F (1843 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (538 °C), or more narrowly greater than or equal to 800.0 °F (427 °C), such as between 900.0 °F (482 °C) and 975.0 °F (524 °C). The relatively low EGT can be utilized in combination with the other techniques disclosed herein to reduce fuel consumption.

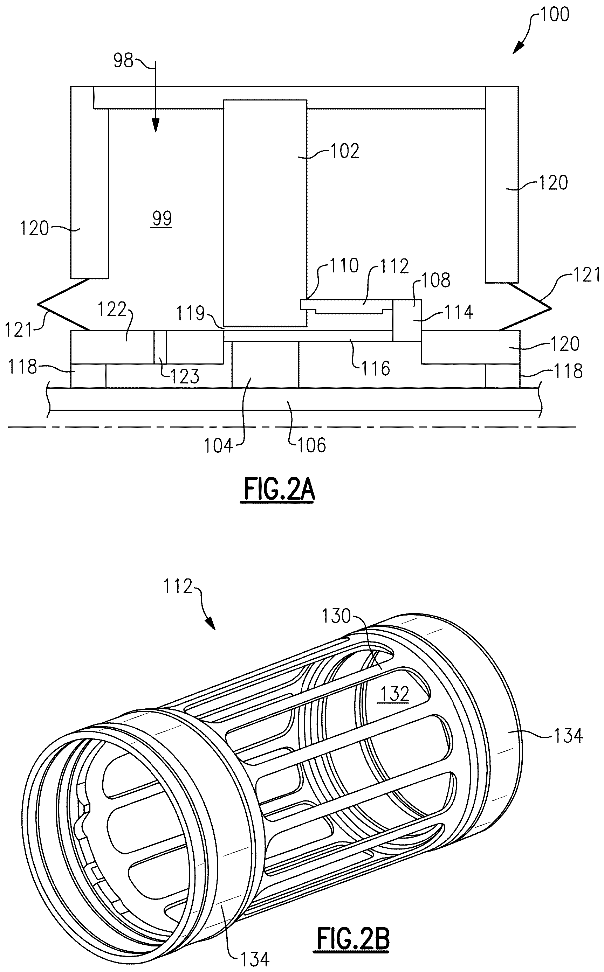

Figure 2A shows a bearing compartment 100 having static structure 102 and a bearing 104. While the bearing 104 is shown as a monolithic part, in practice it may well be a ball bearing with a rotating portion attached to a shaft 106 and non-rotating portion attached to the static structure 102. In this embodiment a flexible centering spring 108 attaches the static structure 102 to the bearing 104. Static structure 102 includes an attachment 110 to a spring portion 112 extending to an axial end portion 114.

Axial end portion 114 is attached to a bearing connection portion 116 that is actually fixed to the bearing 104. A damper annulus 119 is provided radially between the static structure 102 and the bearing 104. It should be understood that within the bearing compartment 99 lubricant is delivered as shown schematically at 98. While shown at a vertically upper end of compartment 100, in practice it is generally at a vertically lower locations. That lubricant passes into the annulus 119 and provides a damper force as the bearing 104 moves relative to the static structure 102.

Radial seals 118 are positioned axially outwardly relative to a rotational axis of the shaft 106 and the bearing 104.

The portion 112 of the flexible centering spring 108 is flexible, and thus allows the bearing 104 to move radially relative to the static structure 102. As this occurs, oil within the annulus 118 acts as a damper.

Seals 118 are fixed to structures 120 and 122 which are attached to portions 114 and 116, respectively, of the flexible centering spring 108.

The hole 123 through the structure 122 allows lubricant to pass through the structure 122. Structure 120 would have a similar hole or holes.

Now, as flexing occurs, the seals 118 can adjust their location along with the bearing 104 relative to the static structure 102.

In the prior art, the seals 118 were fixed to static structure and challenges have been raised by that arrangement. Here, walls 120, which are static, are attached through flexible walls 121 to the members 120 and 122 mounting the seals 118.

As shown in Figure 2B, the flexible portion 112 includes a plurality of fingers 130 with circumferentially intermediate openings or windows 132. One of the ends 134 is attached to the fixed structure 102, and the opposed end is attached to end structure 114.

In other embodiments the flexible portion 112 may be made from curved beams. Also, mount structures wherein both the outer structure 112 and inner structure 116 have spring structure will benefit from this disclosure.

In embodiment the bearing 104 could be any type of bearing, including a journal bearing, ball bearings, roller bearing or tapered roller bearing. The radial seals could be knife edge seals, controlled gap seals, brush seals, spring loaded carbon seals or any other type of radial seal.

The seal support structure 120 and 122 may be made of one part or multiple parts. While single seals 118 are shown at each end, there could be multiple serially spaced seals. The flexible housing 121 could be a single convolute, multiple convolutes, or a bellows design.

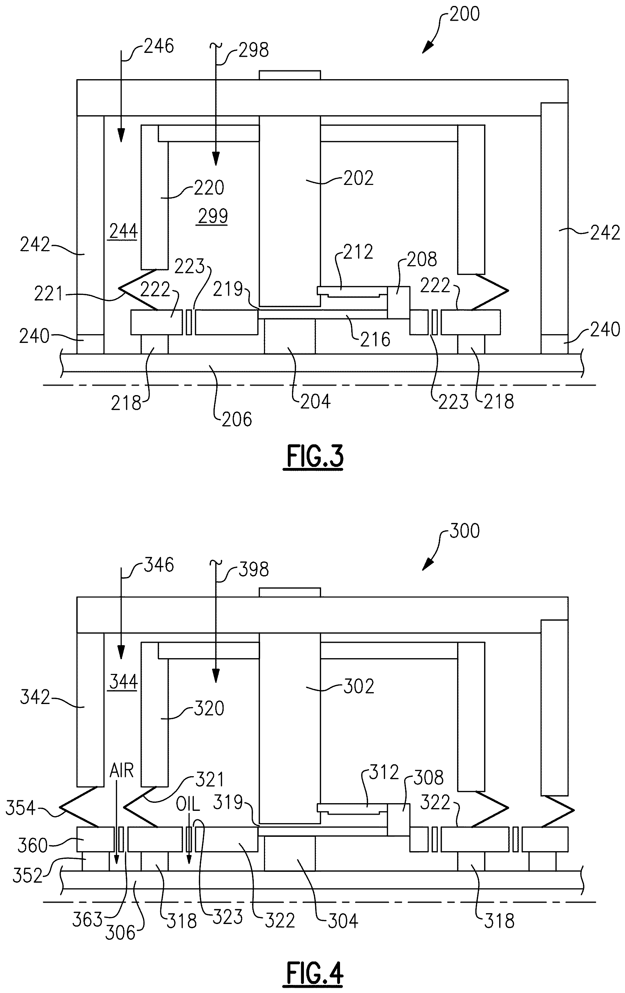

Figure 3 shows another embodiment 200. Here elements that are performing a function similar to that in the Figure 2A embodiment are identified by the same number, however with the number two before them. This embodiment differs in that a buffer air chamber 244 is formed axially outwardly of both seals 218.

Buffer air is delivered as shown schematically at 246 into the chamber 244. Now, outer seals 240 are shown sealing against the shaft 206. These seals are rigidly mounted to walls 242. Again, the inner seals 218 are attached to the bearing 204 such that they may all flex and adjust together due to the flexible centering spring 208.

Figure 4 shows an embodiment 300, which is similar to the embodiment of Figure 3. Here elements that are performing a function similar to that in the Figure 3 embodiment are identified by the same number, however with the number three before them. However, now the outer seals 352 defining the buffer chamber 344 are also attached through elements 360 and 322 to the flexible centering spring 308.

There are also flexible compartment walls 354 connecting an element 360 to the fixed outer walls 342.

The above seals are all non-rotating.

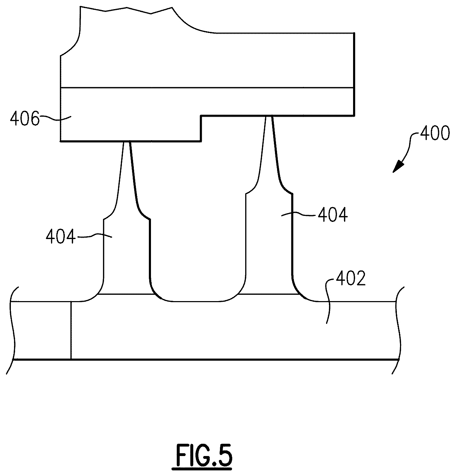

Figure 5 shows an embodiment 400 wherein the shaft 402 receives the seals 404. The seals 404 seal on non-rotating seal structure 406. This embodiment is similar to the earlier embodiments in that the non-rotating seal structure 406 floats with the bearing (not shown here).

While the seals are shown as separate parts in all of these embodiments the seal could be integral with the mount structure or shaft.

A gas turbine engine under this disclosure could be said to include a turbine section and a compressor section. **The** turbine section and the compressor section each include rotors, with a first turbine rotor driving a first compressor rotor through at least one shaft. At least one bearing compartment supports the at least one shaft. **The** first bearing compartment includes static structure, and a bearing supporting the at least one shaft for rotation, and for rotation about a rotational axis, and radial seals sealing on a radially outer surface of the at least one shaft and positioned on each axial side of said at least one bearing. At least one bearing is connected to the static structure through a flexible centering spring. **The** radial seals are attached to a non-rotating portion of the at least one bearing, and also to the flexible centering spring such that the non-rotating portion of the radial seals can move radially along with said fixed portion of the at least one bearing relative to said static structure.

Although embodiments of this disclosure have been shown, a worker of skill in this art would recognize that modifications would come within the scope of this disclosure. As one example, while the propulsor is disclosed as a fan it could also be an open rotor. For that reason, the following claims should be studied to determine the true scope and content of this disclosure.

## Claims

1. A gas turbine engine (20) comprising:
a turbine section (28) and a compressor section (24), said turbine section (28) and said compressor section (24) each including rotors, with a first turbine rotor configured to drive a first compressor rotor through at least one shaft (106; 206; 306; 402);
at least one bearing compartment (100; 200; 300) supporting the at least one shaft (106...402), said at least one bearing compartment (100; 200; 300) including static structure (102; 202; 302), and at least one bearing (104; 204; 304) supporting the at least one shaft (106...402) for rotation, and for rotation about a rotational axis, and radial seals (118; 218; 318; 404) sealing on a radially outer surface of the at least one shaft (106...402) and positioned on each axial side of said at least one bearing (104; 204; 304), said at least one bearing (104; 204; 304) connected to said static structure (102; 202; 302) through a flexible centering spring (108; 208; 308), and said radial seals (118; 218; 318; 404) attached to a non-rotating portion (112) of said at least one bearing (104; 204; 304), and also to said flexible centering spring (108; 208; 308) such that the non-rotating portion (112) of said radial seals (118; 218; 318; 404) can move radially along with said fixed portion (112) of said at least one bearing (104; 204; 304) relative to said static structure (102; 202; 302).

2. The gas turbine engine (20) as set forth in claim 1, wherein a damper annulus (119) is defined between an outer peripheral surface of said at least one bearing (104; 204; 304) and inner peripheral surface of said static structure (102; 202; 302), and said at least one bearing compartment (100; 200; 300) being provided with a lubricant supply such that lubricant may pass into said damper annulus (119) to dampen radial movement of said bearing (104; 204; 304) relative to said static structure (102; 202; 302).

3. The gas turbine engine (20) as set forth in claim 1 or 2, wherein said flexible centering spring (108; 208; 308) includes a portion (112; 212; 312) attached to said static structure (102; 202; 302) which has a plurality of axially extending, and circumferentially spaced, fingers (130) separated by open windows (132) to provide a spring on the flexible centering spring (108; 208; 308).

4. The gas turbine engine (20) as set forth in claim 1, 2 or 3, wherein said radial seals (118; 218; 318) are attached to said flexible centering spring (108; 208; 308) through static structure which is attached to walls (120; 220; 320) of the bearing compartment (100; 200; 300) through flexible chamber walls (121; 221; 321).

5. The gas turbine engine (20) as set forth in claim 4, wherein the flexible chamber walls (121; 221; 321) are defined by structure having undulations.

6. The gas turbine engine (20) as set forth in claim 4, wherein the flexible chamber walls (121; 221; 321) are defined by bellows.

7. The gas turbine engine (20) as set forth in any preceding claim, wherein air buffer chambers (244; 344) are provided axially outwardly of both of said radial seals (218; 404), and said air buffer chamber (244; 344) to receive buffer high pressure air to resist migration of lubricant from the bearing compartment (200; 300) axially outwardly of said radial seals (218; 404).

8. The gas turbine engine (20) as set forth in claim 7, wherein buffer seals (240; 352) are positioned on opposed axial sides of said radial seals (218; 318) to assist in sealing the buffer chamber (244; 344).

9. The gas turbine engine (20) as set forth in claim 8, wherein the buffer seals (240) are fixed to static structure (242).

10. The gas turbine engine (20) as set forth in claim 8, wherein the buffer seals (352) are attached to structure (360) that is attached to the flexible centering spring (308) such that the buffer seals (352) can move along with a static portion of the bearing (304) and the radial seals (318) to adjust during operation of the gas turbine engine (20).

11. The gas turbine engine (20) as set forth in claim 8, wherein a buffer seal wall (342) which mounts the buffer seals (352) also includes a flexible compartment wall (354) that mounts to housing (322) which mounts the radial seal (318) to the flexible centering spring (308).

12. The gas turbine engine (20) as set forth in claim 8, wherein the buffer seals (352) are attached to structure (360) that is attached to the flexible centering spring (308) such that the buffer seals (352) can move along with a static portion of the bearing (304) and the radial seals (318) to adjust during operation of the gas turbine engine (20), and a buffer seal wall (342) which mounts the buffer seals (352) also includes a flexible compartment wall (354) that mounts to housing (322) which mounts the radial seal (318) to the flexible centering spring (308).

13. The gas turbine engine (20) as set forth in any preceding claim, wherein a rotating seal structure rotates with the shaft (106...402) and engages the non-rotating radial seal (118...404).
